Europäisches Patentamt

European Patent Office

Office européen des brevets

(11) Numéro de publication : **0 020 228**
**B1**

# (12) FASCICULE DE BREVET EUROPÉEN

(45) Date de publication du fascicule du brevet :
05.01.83

(51) Int. Cl.³ : **F 16 H 1/40**

(21) Numéro de dépôt : **80400679.9**

(22) Date de dépôt : **14.05.80**

(54) **Différentiel de transmission.**

(30) Priorité : **18.05.79 FR 7912723**

(43) Date de publication de la demande :
**10.12.80 Bulletin 80/25**

(45) Mention de la délivrance du brevet :
**05.01.83 Bulletin 83/01**

(84) Etats contractants désignés :
**BE DE GB IT NL SE**

(56) Documents cités :
FR A 2 234 809
FR A 2 356 850

(73) Titulaire : **REGIE NATIONALE DES USINES RENAULT**
**Boîte postale 103 8-10, Avenue Emile Zola**
**F-92109 Boulogne-Billancourt (FR)**

(72) Inventeur : **Brisabois, Roger**
**101, Avenue Jean-Jaurès**
**F-92140 Clamart (FR)**

(74) Mandataire : **Casalonga, Alain et al**
**BUREAU D.A. CASALONGA OFFICE JOSSE & PETIT**
**Baaderstrasse 12-14**
**D-8000 München 5 (DE)**

## Différentiel de transmission

La présente invention se rapporte aux différentiels de transmission tels que ceux utilisés pour l'entraînement des roues motrices des véhicules routiers, du type comprenant un boîtier renfermant deux planétaires coniques menés et des satellites coniques d'entraînement de ces derniers montés fous sur au moins un axe monté au travers d'orifices correspondants ménagés sur le boîtier.

Le ou les axes porte-satellites sont habituellement immobilisés dans le boîtier à l'aide de vis à téton ou goupilles élastiques, et l'on connaît par le brevet français 2 356 850 un blocage par bague fendue entourant le boîtier et venant en prise avec les extrémités de l'axe porte-satellites.

L'invention a pour objet un montage particulier du ou desdits axes porte-satellites qui est à la fois simple tout en permettant de le ou les libérer en rotation, ce qui diminue les cas de grippage des satellites sur leur axe, et tout en satisfaisant à l'exigence de permettre un contrôle de fabrication visuel destiné à s'assurer que les pièces constitutives du différentiel sont bien en place.

Essentiellement à cet effet, le différentiel de transmission selon l'invention comprenant un boîtier renfermant deux planétaires coniques menés et des satellites coniques d'entraînement de ces derniers montés fous sur au moins un axe monté au travers d'orifices correspondants ménagés sur le boîtier, ledit axe étant maintenu en position à l'aide d'un élément annulaire ceinturant le boîtier et obturant partiellement lesdits orifices, est caractérisé en ce que ledit élément annulaire constitue un élément de butée laissant l'axe libre de tourner.

L'invention peut bien entendu revêtir diverses formes de réalisation, telles que celles ci-après décrites à titre d'exemple et en référence au dessin annexé, dans lequel :

la figure 1 est une vue en coupe d'un boîtier de différentiel suivant I-I de la figure 2 ;

la figure 2 est une vue en coupe suivant II-II de la figure 1 ;

les figures 3 et 4 sont des vues en coupe d'un boîtier de différentiel respectivement suivant III-III de la figure 4 et IV-IV de la figure 3 ;

les figures 5 et 6 sont des vues en coupe d'un boîtier de différentiel, respectivement suivant V-V de la figure 6 et VI-VI de la figure 5 ;

les figures 7 et 8 sont des vues en coupe d'un boîtier de différentiel, respectivement suivant VII-VII de la figure 8 et VIII-VIII de la figure 7 ;

les figures 9 et 10 sont des vues en coupe d'un boîtier de différentiel, respectivement suivant IX-IX de la figure 10 et X-X de la figure 9 ;

la figure 11 est une vue de détail dudit élément annulaire suivant la flèche XI de la figure 10 ;

les figures 12 et 13 sont des vues en coupe d'un boîtier de différentiel, respectivement suivant XII-XII de la figure 13 et XIII-XIII de la figure 12 ;

la figure 14 est une vue de détail dudit élément annulaire suivant la flèche XIV de la figure 13.

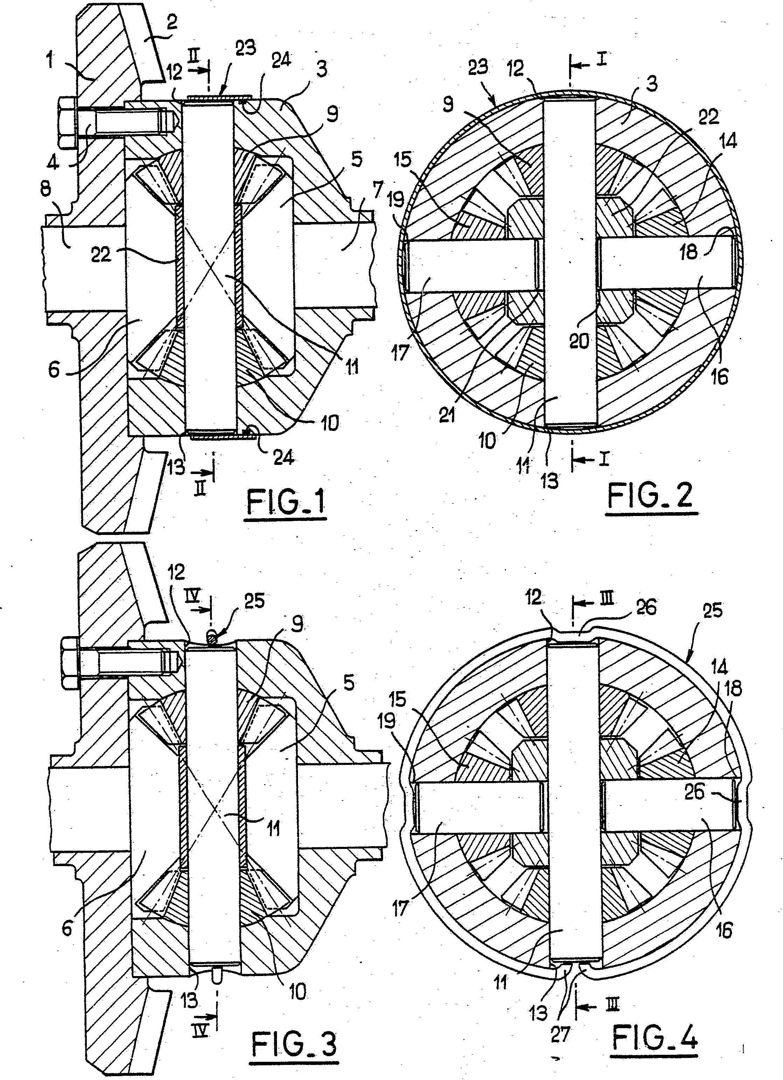

Le boîtier de différentiel représenté à la figure 1 est constitué en deux parties ; un flasque 1 pourvu à sa périphérie d'une couronne d'entraînement dentée 2 qui est l'élément mené du renvoi d'angle usuel ; et une cloche 3 assemblée par vis 4 avec ledit flasque 1.

Le boîtier renferme deux planétaires coniques 5 et 6 respectivement reliés à deux arbres de sortie opposés 7 et 8. Avec ces planétaires coopèrent des satellites coniques, ici au nombre de quatre, comprenant : deux satellites opposés 9 et 10 montés fous sur un axe 11 lui-même monté au travers d'orifices correspondants 12 et 13 ménagés sur le boîtier ; et deux satellites 14, 15 montés sur deux axes 16 et 17 transversaux à l'axe 11 et respectivement montés eux-mêmes au travers d'orifices correspondants 18 et 19 ménagés sur le boîtier, ainsi qu'engagés dans des orifices 20 et 21 ménagés dans une noix centrale 22 engagée sur l'axe 11.

L'axe 11 et les axes transversaux 16 et 17 sont maintenus en position à l'aide d'un anneau métallique 23 ceinturant le boîtier de façon à obturer partiellement les orifices 12, 13, 18 et 19 et pouvant être simplement collé sur celui-ci, par exemple par dépôt de colle dans une zone collectrice du boîtier ici indiqué en 24.

En variante, dans le cas des figures 3 et 4, l'axe 11 et les axes transversaux 16 et 17 sont maintenus en position à l'aide d'un jonc métallique expansible 25, ceinturant le boîtier et présentant trois bossages 26 entrant en engagement de forme avec les orifices 12, 18 et 19 ainsi que des extrémités recourbées adjacentes 27 entrant de même dans l'orifice 13.

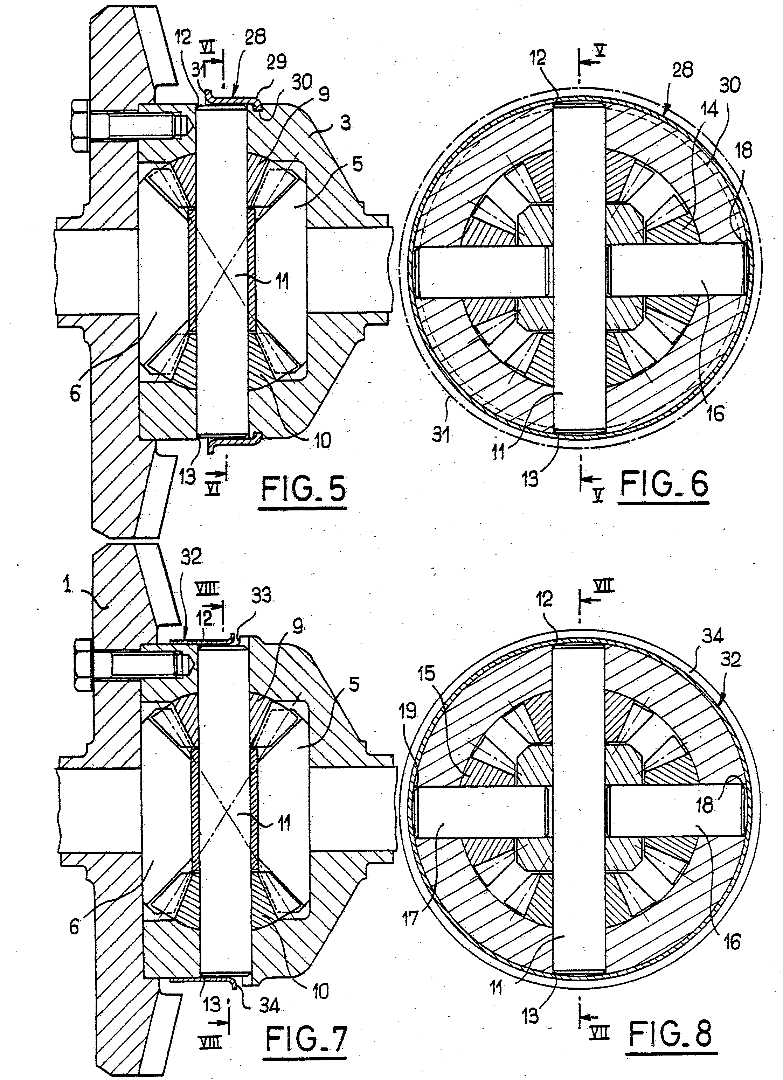

Les figures 5 et 6 illustrent une autre forme de maintien de l'axe 11 et des axes 16, 17 à l'aide d'un anneau métallique 28 ayant un rebord rentrant 29 venant se clipser dans une rainure 30 de la cloche 3 du boîtier et un rebord externe saillant 31 destiné à faciliter son engagement sur la cloche 3.

Les figures 7 et 8 illustrent un autre maintien de l'axe 11 et des axes 16, 17 à l'aide d'un anneau métallique 32 monté sur la cloche 3 du boîtier avant son assemblage avec le flasque 1 et ayant un débattement axial limité par deux épaulements de butée, l'un constitué par le flasque 1 et l'autre par un épaulement 33 de la cloche 3 ménagé de façon à se trouver en intersection avec les orifices 12, 13, 18, 19 et à laisser ainsi visibles en partie les extrémités de l'axe 11 et des axes 16 et 17. L'anneau 32 présente aussi un rebord externe saillant 34 destiné à faciliter son engagement sur la cloche 3 au montage.

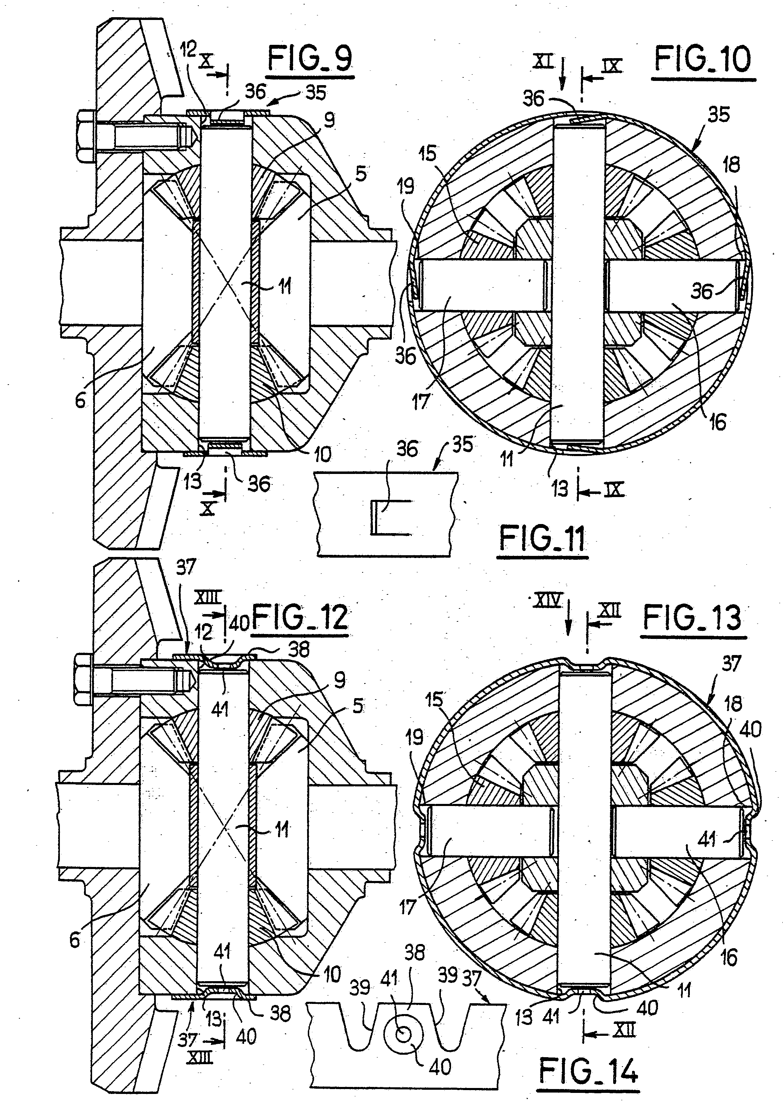

Les figures 9 à 11 illustrent un autre maintien de l'axe 11 et des axes 16, 17 à l'aide d'un anneau métallique 35 présentant des pattes prédécoupées 36 en correspondance des orifices 12, 13, 18 et 19 et destinées à être déformées vers l'intérieur de ceux-ci en position de montage, comme on peut le voir dans la position montée de ces figures, où les pattes laissent visibles en partie les extrémités de l'axe 11 et des axes 16, 17.

Les figures 12 à 14 illustrent un autre maintien de l'axe 11 et des axes 16, 17 à l'aide d'un anneau métallique 37 présentant des pattes 38 prédécoupées en correspondance des orifices 12, 13, 18 et 19 suivant des découpes latérales 39 de sens axial par rapport à l'anneau, ces pattes présentant des bossages emboutis 40 destinés à entrer en engagement de forme dans les orifices 12, 13, 18 et 19 après emmanchement axial de l'anneau et par déformation élastique desdites pattes 38, les bossages 40 étant ici emboutis avec découpage d'un trou central 41 laissant visibles en partie les extrémités de l'axe 11 et des axes 16, 17.

Bien entendu, d'autres variantes peuvent encore être imaginées tout en restant dans le cadre de l'invention.

**Revendications**

1. Différentiel de transmission comprenant un boîtier (1, 2, 3) renfermant deux planétaires coniques menés (5, 6) et des satellites coniques (9, 10, 14, 15) d'entraînement de ces derniers montés fous sur au moins un axe (11, 16, 17) monté au travers d'orifices (12, 13, 18, 19) correspondants ménagés sur le boîtier, ledit axe (11, 16, 17) étant maintenu en position à l'aide d'un élément annulaire (23) ceinturant le boîtier et obturant partiellement lesdits orifices (12, 13, 18, 19), caractérisé en ce que ledit élément annulaire (23) constitue un élément de butée laissant l'axe (11, 16, 17) libre de tourner.

2. Différentiel selon la revendication 1, caractérisé en ce que ledit élément annulaire est un anneau métallique (23) collé sur le boîtier.

3. Différentiel selon la revendication 1, caractérisé en ce que ledit élément annulaire est un jonc métallique expansible (25) conformé pour entrer en engagement de forme avec lesdits orifices (12, 13, 18, 19).

4. Différentiel selon la revendication 1, caractérisé en ce que ledit élément annulaire est un anneau métallique (28) ayant un rebord rentrant (29) de clipsage sur le boîtier et un rebord externe saillant (31) destiné à faciliter son engagement sur le boîtier.

5. Différentiel selon la revendication 1, caractérisé en ce que ledit élément annulaire est un anneau métallique (32) destiné à être monté dans l'intervalle de deux épaulements de butée (1, 33) formés par deux pièces constitutives du boîtier avant leur assemblage, l'un (33) des épaulements étant en intersection avec lesdits orifices (12, 13, 18, 19).

6. Différentiel selon la revendication 1, caractérisé en ce que ledit élément annulaire est un anneau métallique (35) présentant des pattes prédécoupées (36) en correspondance desdits orifices (12, 13, 18, 19) et destinées à être déformées vers l'intérieur de ceux-ci en position de montage.

7. Différentiel selon la revendication 1, caractérisé en ce que ledit élément annulaire est un anneau métallique (37) présentant des pattes prédécoupées (38) en correspondance desdits orifices (12, 13, 18, 19) suivant des découpes latérales (39) de sens axial par rapport à l'anneau (37), ces pattes (38) présentant des bossages emboutis (40) destinés à entrer en engagement de forme dans lesdits orifices (12, 13, 18, 19).

**Claims**

1. A transmission differential comprising a case (1, 2, 3) containing two driven sun bevel gears (5, 6) and planet bevel gears (9, 10, 14, 15) driving the latter fitted loose on at least one shaft (11, 16, 17) mounted through corresponding holes (12, 13, 18, 19) made in the case, with the said shaft (11, 16, 17) being held in position by means of an annular component (23) running round the casing and partially blocking the said holes (12, 13, 18, 19), characterized in that the said annular component (23) acts as a thrust element leaving the shaft (11, 16, 17) free to rotate.

2. The differential according to claim 1, characterized in that the said annular component is a metal hoop (23) bonded to the case.

3. The differential according to claim 1, characterized in that the said annular component is an expandable metal ring (25) shaped in such a way as to mate with the said holes (12, 13, 18, 19).

4. The differential according to claim 1, characterized in that the said annular component is a metal hoop (28) possessing a re-entrant flange (29) for clipping onto the case and an outer protruding flange (31) designed to make it easy to fit onto the case.

5. The differential according to claim 1, characterized in that the said annular component is a metal hoop (32) designed to be installed in the space between two retaining shoulders (1, 33) formed by two parts making up the case before they are assembled, with one (33) of the said shoulders intersecting the said holes (12, 13, 18, 19).

6. The differential according to claim 1, characterized in that the said annular component is a metal hoop (35) having pre-cut-out tabs (36) corresponding to the said holes (12, 13, 18, 19) and designed to be deformed into these holes in the position of installation.

7. The differential according to claim 1, characterized in that the said annular component is a metal hoop (37) having pre-cut-out tabs (38) corresponding to the said holes (12, 13, 18, 19) defined by lateral cut-outs (39) in an axial direction with respect to the hoop (37), with these tabs (38) having pressed bosses (40) designed to mate with the said holes (12, 13, 18, 19).

**Ansprüche**

1. Ausgleichsgetriebe mit einem Gehäuse (1, 2, 3), in dem sich zwei angetriebene Kegelräder (5, 6) sowie Antriebs-Ausgleichskegelräder (9, 10, 14, 15) für diese letzteren befinden, wobei alle auf wenigstens einer Welle (11, 16, 17) sitzen, die in entsprechende im Gehäuse ausgesparte Öffnungen (12, 13, 18, 19) eingesetzt ist, wobei diese Welle (11, 16, 17) mit Hilfe eines Ringelements (23) in ihrer Lage gehalten wird, das das Gehäuse umgibt und diese Öffnungen (12, 13, 18, 19) teilweise verschließt, dadurch gekennzeichnet, daß es sich bei diesem Ringelement (23) um ein Widerlagerelement handelt, das der Welle (11, 16, 17) volle Drehfreiheit läßt.

2. Ausgleichsgetriebe gemäß Anspruch 1, dadurch gekennzeichnet, daß es sich bei dem Ringelement um einen Metallring (23) handelt, der auf das Gehäuse aufgeklebt ist.

3. Ausgleichsgetriebe gemäß Anspruch 1, dadurch gekennzeichnet, daß es sich bei dem Ringelement um einen dehnbaren Metall-Sprengring (25) handelt, der so angepaßt ist, daß er in die genannten Öffnungen (12, 13, 18, 19) formschlüssig einrastet.

4. Ausgleichsgetriebe gemäß Anspruch 1, dadurch gekennzeichnet, daß es sich bei dem genannten Ringelement um einen Metallring (28) handelt, der einen in das Gehäuse einspringenden Flansch (29) und einen vorstehenden Außenflansch (31) aufweist, der den Eingriff auf dem Gehäuse ermöglicht.

5. Ausgleichsgetriebe gemäß Anspruch 1, dadurch gekennzeichnet, daß es sich bei dem genannten Ringelement um einen Metallring (32) handelt, der in den Wischenraum zweier Anschlagbünde (1, 33) montiert wird, die aus zwei Bestandteilen des Gehäuses vor dem Zusammenbau gebildet wird, wobei einer (33) der Bünde sich mit den genannten Öffnungen (12, 13, 18, 19) überschneidet.

6. Ausgleichsgetriebe gemäß Anspruch 1, dadurch gekennzeichnet, daß es sich bei dem genannten Ringelement um einen Metallring (35) handelt, der in Höhe der genannten Öffnungen (12, 13, 18, 19) vorausgestanzte Laschen aufweist, die in Einbaulage nach innen umgebogen werden.

7. Ausgleichsgetriebe gemäß Anspruch 1, dadurch gekennzeichnet, daß es sich bei dem genannten Ringelement um einen Metallring (37) handelt, der in Höhe der genannten Öffnungen (12, 13, 18, 19) vorausgestanzte Laschen (38) gemäß seitlichen Schnitten (39) in Axialrichtung in Bezug auf den Ring (37) aufweist, wobei diese Laschen (38) aufgetriebene Buckel (40) aufweisen, die sich formschlüssig in die genannten Öffnungen (12, 13, 18, 19) einfügen.

FIG_1

FIG_2

FIG_3

FIG_4

FIG.5

FIG.6

FIG.7

FIG.8

0 020 228

FIG_9

FIG_10

FIG_11

FIG_12

FIG_13

FIG_14

3